# EUROPEAN PATENT SPECIFICATION

(11) **EP 1 781 201 B1**
(45) Date of publication and mention of the grant of the patent: **29.06.2011**
(21) Application number: 05756985.7
(22) Date of filing: 04.07.2005
(51) Int. Cl.: A61C 1/08

(54) **GUIDE DEVICE ABLE TO INTERACT WITH A NUMBER OF SLEEVES DISPOSED IN A TOOTH TEMPLATE**
FÜHRUNGSVORRICHTUNG ZUR INTERAKTION MIT EINER ANZAHL VON HÜLSEN IN EINER ZAHNSCHABLONE
DISPOSITIF DE GUIDAGE DE MULTIPLES MANCHONS POUR GABARIT DENTAIRE

(30) Priority: 05.08.2004 SE 0401984
(43) Date of publication of application: 09.05.2007
(60) Divisional application: 10009892.0
(73) Proprietor: Nobel Biocare Services AG, 8058 Zürich-Flughafen (CH)
(72) Inventor: BRAJNOVIC, Izidor, S-416 77 Göteborg (SE)
(74) Representative: Byström, Kurt Linus
(86) International application number: PCT/SE2005/001074
(87) International publication number: WO 2006/014130

(56) References cited:
- EP-A1- 1 317 910
- WO-A1-01/58379
- FR-A1- 2 836 372
- US-A- 5 302 122
- US-A- 5 743 916
- US-A- 6 099 311
- US-A1- 2004 142 300

## Description

The present invention relates to a guide device which is able to interact with a number of sleeves disposed in a tooth template or surgical template and includes a guide part which can be fitted to a corresponding sleeve which is connected to or forms part of a handle part for fitting to the corresponding sleeve of the guide part.

The invention can inter alia be used in connection with rapid dental treatments, e.g. dental treatments in accordance with the "Teeth in an Hour" concept. When implants are fitted, in said rapid treatments use is made inter alia of surgical templates with sleeves, which constitute guides for guide parts which in turn guide the instrument in question, e.g. drill, knife, etc., in connection with the insertion of the implant. The positions of the sleeves in the surgical template are planned in a manner known *per se* in a computer.

The guide part can be such that its external diameter corresponds to an internal diameter of the corresponding tooth template sleeve. The guide part can be made up of a guide sleeve whose central aperture constitutes a guide for a desired instrument, e.g. a drill. The guide part can be supported on a shaft so that it can easily be moved between the various positions for the tooth template sleeves.

In the dental work in question it is known that there are various degrees of difficulty which are dependent on the various positions of the teeth and of the treatment sites in the oral cavity. The teeth and the spaces in the front parts of the oral cavity are easily accessible, whereas problems can arise in achieving rapid and effective treatment in the case of teeth and spaces in the inner parts of the oral cavity. If a shaft-mounted guide part or shaft-mounted guide parts are also desired for the inner teeth and spaces, there can be problems both in fitting the guide part or guide parts and in preventing the shaft protruding from the guide part from hindering the actual work and causing significant discomfort to the patient. The present invention is intended to solve these problems.

It is also desirable that the equipment used should be clear-cut and easy to operate and that for example it can be operated with only small actuation movements. It should be easy to change between different guide parts and shafts during the course of the work. There is also a need for the equipment used to be- easy to clean and sterilize. The present invention also solves these problems.

US-A-5 743 916 describes a guide device which interacts with a number of guide sleeves disposed in a surgical template. The guide device includes a handle part and a guide part. The guide part can be fitted to a guide sleeve of the surgical template and is connected to the handle part.

The present invention provides guide device, which is able to interact with a number of guide sleeves disposed in a surgical template, the guide device including a handle part and a guide part, which guide part can be fitted to a corresponding guide sleeve of said surgical template and which guide part is connected to the handle part, characterised in that the guide part is disposed with a sphere, and in that the handle part is made up of a first part and a second part which are longitudinally displaceable in relation to each other, the second part exhibits an internal space configured to receive the sphere, and wherein, when the sphere is located in the internal space and the first part is in a first longitudinal displacement position, the first part locks the sphere relative to the second part.

In a preferred embodiment, when the first part is in a second longitudinal displacement position, the sphere is rotatable but the first part makes it impossible for the sphere to be removed from the internal space. Furthermore, the sphere can be inserted into the internal space when the first part is in a third longitudinal displacement position. The second part may include an internal thread and the first part include an external thread, which can interact with the internal thread. The guide device may comprise a supporting part which supports the sphere, the supporting part exhibiting a diameter or cross-sectional area which is significantly smaller than the diameter of the sphere. The extent to which the diameter or cross-sectional area of the supporting part may be smaller than the diameter of the sphere lies within the range of 50% to 75%. The internal space may be arranged with a first width which exceeds the diameter of the sphere and a second width which is less that the diameter of the sphere but exceeds the diameter or cross-sectional area of the supporting part.

What is proposed above makes possible a particularly advantageous adjustment function for the handle part where the latter, when the guide part is fitted in a corresponding tooth sleeve, can be given an optimal position where the handle part to the greatest possible extent is prevented from interfering with the dental work while at the same time there can be the least possible discomfort to the patient. The further developments of the inventive idea provide the possibility that small actuation movements can be made in order to attain the different position settings. At the same time the various parts can easily be disassembled for cleaning and sterilisation.

An embodiment of a guide device according to the invention which is proposed at present will be described below with simultaneous reference to the appended drawing, where
Figure 1 shows in vertical section parts of a mandible with teeth and a tooth template arranged in relation to them with a guide sleeve and a guide device with a guide sleeve and handle part and parts of a drill,
Figure 2 shows in exploded view the first and second parts in the handle part,
Figure 3 shows in longitudinal section, and rotated by 90° relative to the view in Figure 2, another part in the handle part,
Figure 4 shows in longitudinal section, and at reduced scale relative to Figures 2 and 3, the handle part with the first and second parts, as shown in Figure 2, assembled,
Figure 5 shows in longitudinal section parts of the second part, as shown in Figure 2, with a sphere in place and different longitudinal displacement positions shown in principle for the first part relative to the second part and the ball bearing race, and
Figures 6 and 7 show in lateral views other types of instruments (knives) which can be fitted to the guide part.

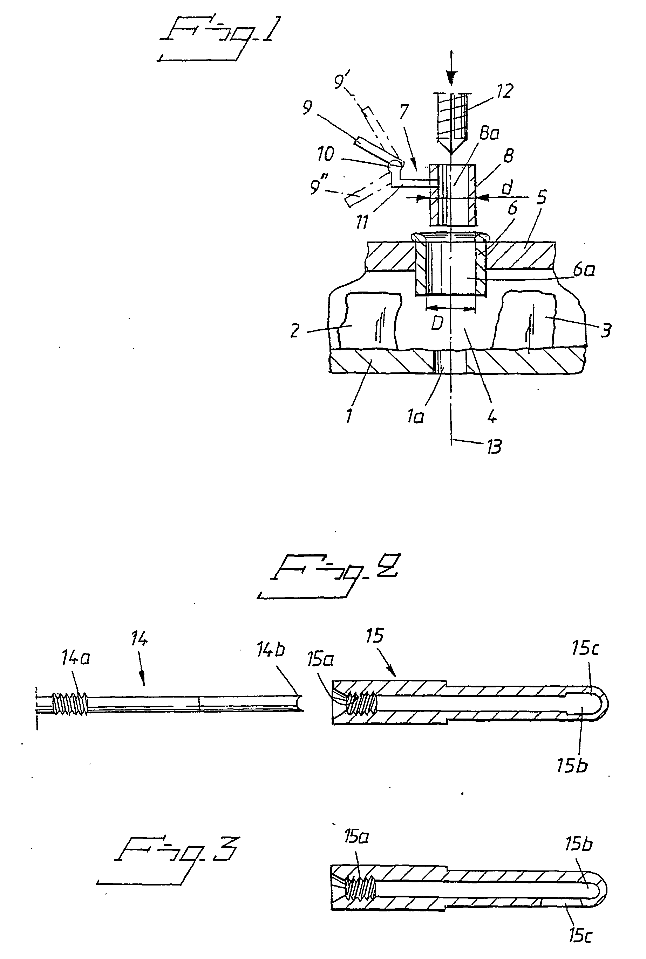

In Figure 1 a mandible is shown in principle as 1. The mandible supports teeth 2 and 3 and also exhibits a space 4 situated between said teeth. A template 5, e.g. tooth template, surgical template, etc., is fitted to the teeth in a manner known *per se*. The template can exhibit one or more guide sleeves 6, the positions of which are pre-calculated by means of a computer (not shown) in a manner known *per se.* A guide device is shown in principle as 7 and includes a guide part 8 and a handle part 9. The guide and handle parts are connected to each other via a ball bearing race 10 and a part 11 supporting the latter. The sleeve 6 is provided with a central aperture 6a with a diameter D. The guide part 8 exhibits an external diameter d which is only slightly smaller than the diameter D. The guide part 8 thus guides into the aperture 6a in the sleeve 6. The guide part 8 is in turn provided with a central aperture 8a, into which a drill 12 is guided when the guide part 8 is lowered into the sleeve 6 for uptake by a drill hole 1a in the mandible. Said drill hole constitutes a hole uptake for an implant in a manner known *per se.* Thanks to the ball bearing race 10 the handle part 9 can be rotated to different height positions, two of which have been denoted 9' and 9" in Figure 1. In addition the guide part 8 is rotatable relative to the sleeve 6 around a longitudinal axis 13 which is common to said sleeves and the drill 12 and the drill hole 1a.

In accordance with Figure 2 the handle part is made up of a first part 14 and a second part 15. The first part is provided at its back end with an external thread 14a and is provided in its front part with an interaction part 14b, by means of which the first part is able to interact with the ball bearing race referred to above. In its back parts the second part exhibits an internal thread 15a, in which the first part can be screwed into the second part by means of its thread 14a. At its front end the second part exhibits an internal space 15b. In addition the second part exhibits a lateral recess 15c, via which the ball bearing race 10 (see Fig. 1) can be inserted into the space with the supporting part 11 extending outside to the sleeve 6.

Figure 3 shows said lateral recess and space in a view that is rotated by 90° relative to Figure 2.

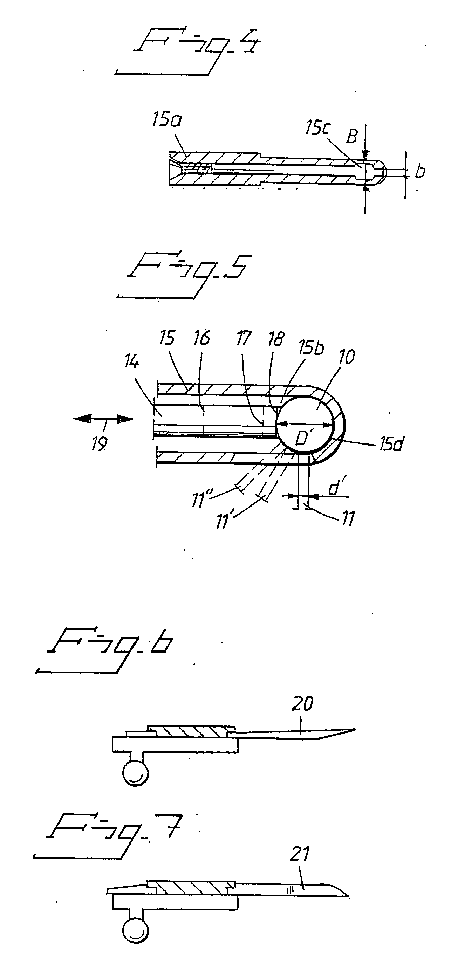

Figure 4 shows the design of the lateral groove 15c. The lateral groove exhibits a first width B and a second width b. The greater width exceeds the diameter or width of the sphere 10, while the smaller width b is less than the diameter of the sphere but exceeds the diameter or cross-sectional area of the supporting part. The sphere can thus be inserted into the space 15b at the greater width and advanced towards the front end of the second part into the space 15b (see Fig. 2).

In accordance with Figure 5, different longitudinal displacement positions relative to the second part 15 can be assigned to the first part 14. The first longitudinal displacement position, which has in principle been indicated as 16, allows the sphere 10 to be inserted into the space 15b and pushed forward or advanced into the space 15b. In a second longitudinal displacement position, which has been indicated as 17, the first part 14 makes it impossible for the sphere 10 to be removed from the space 15b. The sphere is rotatable in the space, however, in this position 17 for the first part. In a third position, which has been indicated as 18, the sphere is locked to a front internal wall 15d of the second part 15. In positions 17 and 18 the supporting member 11 extends to the outside via the lateral recess 15c, at the smaller width b. Said smaller width will thus exceed the diameter d' or cross-sectional area of the supporting member. The rotatability of the sphere in the second position 17 allows the supporting member in Figure 5 to extend to an optionally adjusted position in the plane of the paper. Two further rotational positions have been shown in Figure 5 as 11' and 11". Depending on the choice of the width b and the diameter d', the supporting member can also be actuated relative to the handle part, or vice versa, even at right angles to the plane of the figure in accordance with Figure 5. For the sphere 10 the diameter D' thereof, which will be less than the width B but exceed the width b, has also been indicated in Figure 5. It can be seen that the construction described above makes possible a large number of individual rotational positions between the second part and the guide part 8. The actuation directions for the first part relative to the second part are shown as 19 in Figure 5.

Figures 6 and 7 are intended to show in principle that the guide part can be a guiding member for other types of instruments than drills, e.g. knives. In Figures 6 and 7 the blades of the knives have been indicated as 20 and 21.

The invention is not limited to the embodiments shown above as examples but can be subject to modifications within the scope of the following claims.

## Claims

1. Guide device (7), which is able to interact with a number of guide sleeves (6) disposed in a surgical template (5), the guide device (7) including
a handle part (9) and
a guide part (8), which guide part (8) can be fitted to a corresponding guide sleeve (6) of said surgical template (5) and which guide part (8) is connected to the handle part (9),
**characterised in that** the guide part (8) is disposed with a sphere (10), and
**in that** the handle part (9) is made up of a first part (14) and a second part (15) which are longitudinally displaceable in relation to each other, the second part (15) exhibits an internal space (15b) configured to receive the sphere (10), and wherein, when the sphere (10) is located in the internal space (15b) and the first part (14) is in a first longitudinal displacement position (18), the first part (14) locks the sphere (10) relative to the second part.

2. Guide device (7) as claimed in Claim 1, **characterised in that** when the first part (14) is in a second longitudinal displacement position (17), the sphere (10) is rotatable but the first part (14) makes it impossible for the sphere (10) to be removed from the internal space (15b).

3. Guide sleeve (7) as claimed in Claim 1 or 2, **characterised in that** the sphere (10) can be inserted into the internal space (15b) when the first part (14) is in a third longitudinal displacement position (16).

4. Guide device (7) as claimed in any of Claims 1 to 3, **characterised in that** the second part (15) includes an internal thread (15a) and the first part (14) includes an external thread (14a), which can interact with the internal thread (15a).

5. Guide device (7) as claimed in any of Claims 1 to 4, **characterised in that** the guide device (7) comprises a supporting part (11) which supports the sphere (10), the supporting part exhibiting a diameter or cross-sectional area which is significantly smaller than the diameter of the sphere (10).

6. Guide device (7) as claimed in Claim 5, **characterised in that** the extent to which the diameter or cross-sectional area of the supporting part (11) is smaller than the diameter of the sphere (10) lies within the range of 50% to 75%.

7. Guide sleeve (7) as claimed in Claim 5 and 6, **characterised in that** the internal space (15b) is arranged with a first width which exceeds the diameter of the sphere (10) and a second width which is less that the diameter of the sphere (10) but exceeds the diameter or cross-sectional area of the supporting part (11).

## Patentansprüche

1. Führungsvorrichtung (7), die mit einer Anzahl Führungshülsen (6) zusammenwirken kann, die in einer Operationsschablone (5) angeordnet sind, wobei die Führungsvorrichtung (7)
einen Handgriffteil (9) und
einen Führungsteil (8) aufweist, wobei der Führungsteil (8) in eine entsprechende Führungshülse (6) der Operationsschablone (5) eingepasst werden kann und wobei der Führungsteil (8) mit dem Handgriffteil (9) verbunden ist,
**dadurch gekennzeichnet, dass** der Führungsteil (8) mit einer Kugel (10) versehen ist und
dass der Handgriffteil (9) aus einem ersten Teil (14) und einem zweiten Teil (15) aufgebaut ist, die längs in Bezug aufeinander verschiebbar sind, wobei der zweite Teil (15) einen inneren Raum (15b) zeigt, der zur Aufnahme der Kugel (10) ausgebildet ist, und wobei, wenn die Kugel (10) in dem inneren Raum (15b) angeordnet ist und der erste Teil (14) in einer ersten Längsverschiebeposition (18) ist, der erste Teil (14) die Kugel (10) relativ zu dem zweiten Teil blockiert,

2. Führungsvorrichtung (7) nach Anspruch 1, **dadurch gekennzeichnet, dass**, wenn der erste Teil (14) in einer zweiten Längsverschiebeposition (17) ist, die Kugel (10) drehbar ist, der erste Teil (14) es jedoch für die Kugel (10) unmöglich macht, aus dem inneren Raum (15b) entfernt zu werden.

3. Führungsvorrichtung (7) nach Anspruch 1 oder 2, **dadurch gekennzeichnet, dass** die Kugel (10) in den inneren Raum (15b) eingeführt werden kann, wenn der erste Teil (14) in einer dritten Längsverschiebeposition (16) ist.

4. Führungsvorrichtung (7) nach einem der Ansprüche 1 bis 3, **dadurch gekennzeichnet, dass** der zweite Teil (15) ein Innengewinde (15a) aufweist und der erste Teil (14) ein Außengewinde (14a), das mit dem Innengewinde (15a) zusammenwirken kann.

5. Führungsvorrichtung (7) nach einem der Ansprüche 1 bis 4, **dadurch gekennzeichnet, dass** die Führungsvorrichtung (7) einen Trägerteil (11) aufweist, der die Kugel (10) trägt, wobei der Trägerteil einen Durchmesser oder eine Querschnittsfläche zeigt, die deutlich kleiner ist als der Durchmesser der Kugel (10).

6. Führungsvorrichtung (7) nach Anspruch 5, **dadurch gekennzeichnet, dass** das Ausmaß, in dem der Durchmesser oder die Querschnittsfläche des Trägerteils (11) kleiner als der Durchmesser der Kugel (10) ist, innerhalb des Bereichs von 50 % bis 75 % liegt.

7. Führungsvorrichtung (7) nach Anspruch 5 und 6, **dadurch gekennzeichnet, dass** der innere Raum (15b) innerhalb einer ersten Breite angeordnet ist, die den Durchmesser der Kugel (10) überschreitet, und einer zweiten Breite, die kleiner als der Durchmesser der Kugel (10) ist, jedoch den Durchmesser oder die Querschnittsfläche des Trägerteils (11) überschreitet.

## Revendications

1. Dispositif de guidage (7), qui peut interagir avec un nombre de manchons de guidage (6) disposés dans un gabarit chirurgical (5), le dispositif de guidage (7) comportant
une partie de poignée (9) et
une partie de guidage (8) , laquelle partie de guidage (8) peut être ajustée à un manchon de guidage (6) correspondant dudit gabarit chirurgical (5) et laquelle partie de guidage (8) est reliée à la partie de poignée (9),
**caractérisé en ce que** la partie de guidage (8) est disposée avec une sphère (10), et
**en ce que** la partie de poignée (9) est constituée par une première partie (14) et une deuxième partie (15) qui peuvent être déplacées longitudinalement l'une par rapport à l'autre, la deuxième partie (15) présente un espace intérieur (15b) configuré pour recevoir la sphère (10), et où, lorsque la sphère (10) est placée dans l'espace intérieur (15b) et que la première partie (14) est dans une première position de déplacement longitudinal (18), la première partie (14) verrouille la sphère (10) par rapport à la deuxième partie.

2. Dispositif de guidage (7) tel que revendiqué dans la revendication 1, **caractérisé en ce que** lorsque la première partie (14) est dans une deuxième position de déplacement longitudinal (17), la sphère (10) peut être mise en rotation, mais la première partie (14) rend impossible le retrait de la sphère (10) de l'espace intérieur (15b).

3. Manchon de guidage (7) tel que revendiqué dans la revendication 1 ou 2, **caractérisé en ce que** la sphère (10) peut être insérée dans l'espace intérieur (15b) lorsque la première partie (14) est dans une troisième position de déplacement longitudinal (16).

4. Dispositif de guidage (7) tel que revendiqué dans l'une des revendications 1 à 3, **caractérisé en ce que** la deuxième partie (15) comporte un filetage intérieur (15a) et la première partie (14) comporte un filetage extérieur (14a), qui peut interagir avec le filetage intérieur (15a).

5. Dispositif de guidage (7) tel que revendiqué dans l'une des revendications 1 à 4, **caractérise en ce que** le dispositif de guidage (7) comprend une partie de support (11) qui supporte la sphère (10), la partie de support présentant un diamètre ou une surface en coupe transversale qui est nettement plus petit (e) que le diamètre de à sphère (10).

6. Dispositif de guidage (7) tel que revendiqué dans la revendication 5, **caractérisé en ce que** le diamètre ou la surface en coupe transversale de la partie support (11) est plus petit(e) que le diamètre de la sphère (10) dans une mesure dans la plage de 50% à 75%.

7. Manchon de guidage (7) tel que revendique dans la revendication 5 et 6, **caractérisé en ce que** l'espace intérieur (15b) est agencé avec une première largeur qui dépasse le diamètre de la sphère (10) et une deuxième largeur qui est inférieure au diamètre de la sphère (10) mais qui dépasse le diamètre ou dépasse une surface en coupe de la partie de support (11).
